# EUROPÄISCHE PATENTSCHRIFT

(11) **EP 3 384 759 B1**
(45) Veröffentlichungstag und Bekanntmachung des Hinweises auf die Patenterteilung: **22.12.2021**
(21) Anmeldenummer: 18000322.0
(22) Anmeldetag: 04.04.2018
(51) Int. Cl.: A01F 15/14, A01F 15/12

(54) **LANDWIRTSCHAFTLICHE GROSSPACKENPRESSE**
AGRICULTURAL LARGE PACKING PRESS
PRESSE À GROSSES BALLES AGRICOLE

(30) Priorität: 07.04.2017 DE 102017003447
(43) Veröffentlichungstag der Anmeldung: 10.10.2018
(73) Patentinhaber: Maschinenfabrik Bernard Krone GmbH & Co. KG, 48480 Spelle (DE)
(72) Erfinder: Frische, Tobias, 48477 Hörstel (DE); Amshove, Martin, 48619 Heek (DE); Fehlker, Bernd, 48607 Ochtrup-Welbergen (DE)

(56) Entgegenhaltungen:
- EP-A2- 0 865 721
- EP-A2- 2 407 024
- US-A1- 2003 226 334

## Beschreibung

Die Erfindung betrifft eine landwirtschaftliche Großpackenpresse zur Verdichtung von auf dem Feldboden befindlichem Erntematerial wie Stroh, Heu oder dergleichen, welche einen Stützrahmen zur Aufnahme von Bindematerial nach dem Oberbegriff des Anspruchs 1 aufweist.

In der Landwirtschaft sind Großpackenpressen, auch als Quaderballenpressen bezeichnet, seit geraumer Zeit bekannt und werden in zahlreichen Varianten eingesetzt. Zu den großen Vorteilen dieser Landmaschinen zählen unter anderem die kontinuierliche Pressarbeit, eine in der Regel hohe Pressdichte und die gute Lagerbarkeit der gefertigten Erntegutballen. Dazu sammeln diese Maschinen zunächst auf dem Feld liegendes Erntegut mit Hilfe einer Aufnahmevorrichtung, landläufig als Pick-Up bekannt, auf. Im Anschluss wird das Erntegut von einer Fördereinrichtung übernommen, beispielsweise einem Förderrotor, oder einer Raffereinheit. Diese fördert das Erntegut in einen zum Presskanal führenden Förderkanal. Sobald der Presskolben weit genug zurückgefahren wurde, wird das gesammelte Erntegut in die Presskammer befördert, wo es durch den Presskolben zu einem Großpacken, welche auch als Quaderballen bezeichnet werden, verdichtet wird.

Wie bei vielen Maschinentypen im landwirtschaftlichen Sektor ist auch bei Großpackenpressen das Bestreben der Hersteller zu erkennen, den Kundenwünschen nach Maschinen mit höherer Leistungsfähigkeit bestmöglich nachzukommen, dabei jedoch sicherheitsrelevante Vorschriften einzuhalten, sowie den Komfort für den Benutzer möglichst zu erhöhen. Mit der Steigerung von Komfort und Leistungsfähigkeit geht allerdings zumeist auch eine Steigerung des Gewichts mit einher.

Die zuvor erwähnte hohe Pressdichte, größere Leistungsfähigkeit und ein erhöhtes Gewicht der Ballenpresse gehen dabei in der Regel einher. Maschinengruppen werden größer dimensioniert, um eine Erhöhung von Erntegutdurchsatz und Pressdichte realisieren zu können. Darüber hinaus finden immer mehr Einrichtungen zur komfortableren Bedienung Einsatz in der Landtechnik. Das zusätzliche Gewicht, das durch diese Entwicklungen anfällt wird so gut wie möglich an anderer Stelle eingespart. So werden beispielsweise Maschinenschutze nicht mehr aus Metall gefertigt, sondern aus Kunst- und/oder Verbundstoffen.

Um den erhöhten Durchsatz und die kontinuierliche Pressleistung einer Großpackenpresse vollends nutzen zu können, muss sichergestellt sein, dass für die anstehende Aufgabe ausreichend Bindematerial zur Verfügung steht. Im Stand der Technik werden hierfür zahlreiche Lagermöglichkeiten für Bindematerial vorgeschlagen. Dabei haben alle Lösungen eine Gemeinsamkeit. Das Bindematerial wird stets in Vorratskästen aufbewahrt, wenngleich in unterschiedlichsten Ausführungen. Diese Vorratskästen bringen jedoch ein nicht unerhebliches Gewicht mit sich. Denn sie verfügen über Regalböden, oder Rinnen, auf denen Bindematerialrollen gelagert werden können. An dieser Stelle sei angemerkt, dass aktuell handelsübliche Bindematerialrollen im Neuzustand zwischen 5kg und 15kg wiegen. Daher empfiehlt es sich zuvor erwähnte Regalböden aus Metall zu fertigen, um diese Bindematerialrollen problemlos zu stützen, wodurch sich erwähntes, nicht unerhebliches Gewicht erklärt.

Darüber hinaus bestehen in den dem Stand der Technik bekannten Garnkästen oft Probleme bei der Zuordnung der Lagerplätze von Bindematerialrollen zu einer Bindeeinheit. Zur Verdeutlichung: Die Bindematerialrollen werden untereinander verknüpft, um einen möglichst langen, ununterbrochenen Arbeitseinsatz der Maschine gewährleisten zu können. In der Regel werden jedoch sechs oder mehr Bindeeinheiten für einen zu umschlingenden Ballen eingesetzt. Zusätzlich werden Bindeeinheiten eingesetzt, sogenannte Doppelknoter, die mit zwei Bindematerialsträngen beschickt werden, einem sogenannten Oberfaden und einem Unterfaden. Sämtliche Angaben wie "oben", "unten", "links", "rechts", "vorne" und "hinten" werden von der Maschine aus in Fahrtrichtung der Zugmaschine weisend verwendet. Aufgrund der fixen Position der Bindeeinrichtung oberhalb der Presskammer muss der Unterfaden einen größeren Weg zurücklegen, um wieder mit dem Oberfaden verbunden zu werden, wodurch die Umreifung des Ballens abgeschlossen wird. Zur näheren Erläuterung der Umreifung eines Ballens mit Bindematerial bei der Nutzung eines Doppelknoters wird die Maschine von links betrachtet. Der zu umschlingende Ballen erhält im Presskanal während der stetigen Zugabe von Erntematerial mehr und mehr die Form eines Rechtecks. Das Bindematerial wird als Ober- und Unterfaden verbunden. Der geformte Knoten setzt sich im Laufe der Ballenformung im Winkel oben rechts. Der Oberfaden wandert entlang der Oberseite des Ballens, während der Unterfaden zunächst die hintere Seite des Ballens hinuntergeführt wird, dann entlang der Unterseite verläuft und schließlich an der vorderen Ballenseite zurück zur Ballenoberseite befördert wird. Hier wird er erneut mit dem Oberfaden verbunden. Je nach Ballenlänge und -höhe ergibt sich daraus ein bis zu 50% höherer Verbrauch von Bindematerial für den Unterfaden. Üblicherweise eingesetzte Garnkästen weisen zwei bis drei Regalreihen auf, welche in weitere Fächer aufgeteilt sind, in denen die Bindematerialrollen aufbewahrt werden. Die Hersteller müssen sich als möglichst intuitive Muster für die Verknüpfung der einzelnen Bindematerialrollen überlegen, um eine Fehlfunktion durch falsche Verbindung durch den Benutzer zu vermeiden.

Im Stand der Technik ist ein Lösungsansatz bezüglich vereinfachter Zuordnung von Bindematerialsträngen zu einer Bindeeinheit durch die DE 10 2012 002 796 A1 vorgeschlagen. Hierbei werden drei Regalreihen vorgeschlagen, in denen die Bindematerialrollen der Länge nach parallel zu einer Maschinenmittelachse verstaut und miteinander verknüpft werden, wobei jede Regalreihe einer Bindeeinheit zugeordnet ist. Dieser Lösungsansatz ist leider nur für sogenannten Einfachknoter sinnvoll, welche ihrem Namen entsprechend einen Ballen nur mit einem Knoten versehen und einen Ballen mit nur einem Strang umschlingen. Ein Lösungsansatz für

Doppelknoter bleibt aus. US 2003/0226334 A1 offenbart eine Rundballenpresse, bei der Erntegut über eine Aufnahmeeinrichtung vom Feld- oder Wiesenboden aufgenommen wird und einer nachfolgenden Ballenformkammer zugeführt wird.

Es ist daher Aufgabe der vorliegenden Erfindung, eine landwirtschaftliche Großpackenpresse anzubieten, welche eine gewichtseinsparende, benutzerfreundliche und dennoch sichere Möglichkeit zum Bewältigung der im Stand der Technik auftretenden Herausforderungen anbietet, indem eine gewichtsarme und größtenteils staubdichte Lösung als Bindematerialspeicher angeboten wird.

Die Aufgabe wird gelöst durch eine landwirtschaftliche Großpackenpresse gemäß den Merkmalen des Anspruchs 1, wobei vorteilhafte Weiterbildungen aus den weiteren Patentansprüchen und den Ausführungsbeispielen hervorgehen.

Die erfindungsgemäße, landwirtschaftliche Großpackenpresse verfügt über ein Fahrwerk zum Abstützen der Großpackenpresse auf dem Feldboden, eine Aufnahmevorrichtung zum Bergen von auf dem Feldboden liegendem Erntegut, wenigstens eine Fördereinrichtung zur Beförderung des geborgenen Ernteguts in einen Presskanal, in welchem ein hin und her beweglich angetriebener Presskolben dazu ausgelegt ist, das Erntegut zu verdichten, mit wenigstens einer dem Presskanal zugeordneten Bindeeinheit zum Umreifen des Ernteguts mit Bindematerial, sowie zumindest einen Stützrahmen zur Aufnahme von Bindematerialrollen, der mit dem Maschinenhauptrahmen verbunden ist, wobei der Stützrahmen zumindest eine Bindematerialrollen aufnehmende, vertikal ausgerichtete Lagersäule abstützt, wobei die zumindest eine Bindematerialrollen aufnehmende Lagersäule von zumindest zwei Maschinenverkleidungselementen umschlossen wird, welche sich wie die Lagersäulen auf dem Stützrahmen abstützen und keine tragende Funktion bei der Abstützung der Bindematerialrollen übernehmen.

Gemäß der Erfindung wird eine landwirtschaftliche Großpackenpresse mit zwei achssymmetrisch angeordneten Stützrahmen versehen. Zur Gewichtsersparnis wird vorgeschlagen, die Stützrahmen als einfache Rohrrahmen auszuführen. Die Stützrahmen werden beidseitig der Presskammer mit dem Maschinenhauptrahmen verbunden. Zur einfacheren Beschreibung beschränkt sich das Ausführungsbeispiel ab sofort auf eine der beiden Maschinenseiten.

Bevorzugt wird ein erstes Maschinenverkleidungselement der wenigstens zweiteiligen Maschinenverkleidung fest mit dem Stützrahmen verbunden. Somit kann das Maschinenverkleidungselement mit dem Stützrahmen zu Wartungszwecken leicht vom Maschinenhauptrahmen entfernt werden. Vorteilhaft wird wenigstens eine Lagersäule für jede Bindeeinheit zur Aufbewahrung und Abgabe von Bindematerial mit dem Stützrahmen verbunden. Die Befestigung erfolgt entweder direkt, oder indirekt mit Hilfe einer am Stützrahmen montierten Tragstrebe. Dabei wird die Lagersäule in das zuvor erwähnte Maschinenverkleidungselement eingebettet. Ein zweites Maschinenverkleidungselement wird nun bevorzugt mit dem Stützrahmen derart verbunden, dass besagte Lagersäule von Maschinenverkleidungselementen umschlossen wird. An dieser Stelle ist aber auch die Anbringung des Maschinenverkleidungselements an den Maschinenhauptrahmen oder an das erste Maschinenverkleidungselement denkbar.

Zu Wartungszwecken ist es überdies wünschenswert, angetriebene, empfindliche oder bewegbare Teile oder Baugruppen der Maschine schnell und einfach zu erreichen. Derartige Bereiche sind üblicherweise aus Sicherheitsgründen, durch Maschinenverkleidungselemente verborgen, unzugänglich. Sinnvollerweise wird der Stützrahmen daher mittels einer Schwenkachse mit dem Maschinenhauptrahmen verbunden. Durch eine derartige Schwenkachse kann ein Stützrahmen am Hauptrahmen verschwenkt werden. Erfindungsgemäß wird im oberen Bereich des Maschinenhauptrahmens eine etwa horizontal ausgerichtete Schwenkachse zur Verbindung von dem Stützrahmen mit dem Maschinenhauptrahmen eingesetzt. Um übermäßige körperliche Anstrengung des Wartungsmechanikers zu verringern, wird der Einsatz von Hilfselementen wie Gasdruckfedern oder Kolbenzylindereinheiten, wie einem Hydraulikzylinder, vorgeschlagen. Diese werden zwischen Maschinenhauptrahmen und Stützrahmen eingesetzt, um die Schwenkbewegung der Kombination aus Stützrahmen, Maschinenverkleidung und Bindemateriallagersäulen zu ermöglichen, oder wenigstens zu vereinfachen.

Eine besonders vorteilhafte Ausführung sieht vor, besagtes zweites Maschinenverkleidungselement mit Hilfe einer zweiten Schwenkachse ebenfalls an dem Stützrahmen anzubringen. Durch die beiden Maschinenverkleidungselemente kann beispielsweise mithilfe einer Dichtlippe aus Gummi oder ähnlichen Dichtelementen eine größtenteils Staub- und Schmutzgeschützte Hülle um die Lagersäule geformt werden. Dabei scheint kein bedeutender Unterschied aufzutreten, ob man das erste Maschinenverkleidungselement in einem Bereich um die Lagersäulen aufnehmende Mulde abdichtet, oder das quasi als "Deckel" fungierende zweite Maschinenverkleidungselement in einem zur ersten Maschinenverkleidungselement ausgerichteten Innenseite. Weitere interessante Ausführungen sehen vor, das zweite Maschinenverkleidungselement schwenkbar mit dem Maschinenhauptrahmen oder dem ersten Maschinenverkleidungselement zu verbinden. Eine derart schwenkbar ausgeführte Klappe ermöglicht eine gute Zugänglichkeit der Bindematerial aufnehmenden Lagersäulen.

Zur weiteren Verringerung der Gewichtsbelastung, schlägt die Erfindung für die Maschinenverkleidung die Verwendung eines Kunststoffes oder eines Verbundwerkstoffes vor. Vornehmlich wird beispielsweise ein Faserverbundkunststoff, wie beispielsweise Glasfaserkunststoff genutzt. Durch den Einsatz eines solchen Kunstoffs für die Maschinenverkleidungselemente kann zum einen ein zeitgemäßes, optisch ansprechendes Design der Maschine verwirklicht werden. Zum anderen sorgt eine entsprechende Maschinenverkleidung dafür, dass bewegliche Maschinenteile nicht problemlos für Unbeteiligte zugänglich sind. So können schwerwiegende Verletzungen verhindert, oder wenigstens erschwert werden. Da die Lagersäulen derart ausgelegt sind, dass kein Maschinenverkleidungselement besonders belastet wird, kann auch über eine Verwendung noch dünnerer/ leichter Materialien zwischen den Lagersäulen und dem Maschinenhauptrahmen nachgedacht werden. Um einen gewissen Staubschutz zu erhalten, scheint eine widerstandsfähige Folie sinnvoll eingesetzt zu sein. Aber auch eine Abdeckung aus Gewebe kann zweckmäßig sein.

Zur Beschickung einer Bindeeinheit verfügt das Maschinenverkleidungselement, in dessen Mulde die Lagersäulen eingesetzt sind, an seiner maschinenzugewandten Seite über Bohrungen. Durch diese Bohrungen werden die erforderlichen Bindematerialstränge hindurchgeführt. Die Bohrungen sind in einer besonders vorteilhaften Ausführung durch Dichtungen, gefederte Platten, gefederte Scheiben oder vergleichbare Einrichtungen verdeckt. So kann die zu erwartende Verschmutzung im Inneren der von den Maschinenverkleidungselementen gebildeten Kammer weiter minimiert werden.

Darüber hinaus sind Aussparungen im unteren Bereich der Mulde im Maschinenverkleidungselement vorgesehen, sodass im Stützrahmen vorgesehene Auflageflächen durch die Aussparungen sichtbar und nutzbar werden. Diese Auflageflächen können, wie zuvor beschrieben, zur direkten Verbindung der Lagersäulen genutzt werden. Um die benötigte Auflagefläche zu verringern, empfiehlt die Erfindung jedoch den Einsatz einer Tragstrebe. Diese nimmt zum einen sämtliche Gestelle der Lagersäulen auf. Zum anderen verringert sie die benötigten Durchbrüche im Maschinenverkleidungselement, sowie die am Stützrahmen befestigten Auflageflächen. Aufgrund der zunehmenden Größe von modernen landwirtschaftlichen Großpackenpressen und dem einhergehenden Gewicht, müssen auch die Bereifung und das Fahrwerk an diesen Umstand angepasst werden. Durch den Einsatz komplexerer Fahrwerke und größerer Bereifung ergibt sich auch eine Steigerung der Höhe eingesetzter Bindemateriallager. Zur erleichterten Befüllung der erfindungsgemäßen Gestelle der Lagersäulen ist es erforderlich, sie um eine Achse schwenkbar auszuführen.

Dabei sind sowohl eine horizontale, als auch eine vertikale Schwenkachse vorstellbar. Die nutzerfreundlichste Version scheint hierbei die Verwendung einer vertikalen Schwenkachse, etwa parallel zur Tragstrebe. Zum Be- und Nachfüllen von Bindematerialrollen wird das Gestell um die Schwenkachse in eine horizontale Ladestellung verschwenkt. Zur Abgabe von Bindematerial werden die Gestelle in die Mulde des Maschinenverkleidungselements hereingeschwenkt und bestenfalls in dieser Position fixiert. Dabei kommt ein weiter Vorteil der vorgeschlagenen Erfindung zum Tragen. Die bekannten Bindemateriallager verlangen konstruktionsbedingt die Umpositionierung von angebrochenen Bindematerialrollen. Dabei wird in aller Regel die letzte (angebrochene) Bindematerialrolle von einer unteren Position im Bindemateriallager in eine obere Position versetzt, oder von einer inneren Position in eine äußere Position. Im Fall der vorliegenden Erfindung muss lediglich eine Verschiebung der auf zwei Bügeln gelagerten Bindematerialrolle erfolgen. Dabei wird die verbleibende Bindematerialrolle in der Beladeposition der Lagersäule von der Maschine weg weisend im Gestell verschoben. Neue Bindematerialrollen werden einfach dahinter angeordnet und miteinander verknüpft. Dadurch ist in der vertikalen Arbeitsposition der Lagersäule sichergestellt, dass die sich leerende Bindematerialrolle oben auf der Säule von vollen und stabilen Bindematerialrollen befindet. Gleichzeitig besteht keine Notwendigkeit mehr, bestehende Verknüpfungen von Bindematerialrollen zu lösen, um den Bindematerialvorrat nachzufüllen oder umzusetzen.

Weiterhin wird vorgeschlagen, einen Teil des Gestells der Lagersäulen variabel auszuführen, um einem Benutzer die Option zu eröffnen, verschiedene Größen von Bindematerialrollen einzusetzen. Beispielsweise können Bügel im Gestell steckbar ausgeführt werden. Durch die Verwendung steckbarer Bügel können in dem Gestell passende Lochbilder für handelsübliche Bindematerialrollendurchmesser eingelassen werden. Eine weitere Möglichkeit stellt der Einsatz exzentrischer Elemente dar, welche je nach eingesetztem Bindematerialrollendurchmesser passend eingestellt werden können.

Eine besonders komfortable Ausführung sieht weiterhin vor, einen Sensor zur Anzeige des von Bindematerialverbrauchs einzusetzen. Dabei könnte beispielsweise eine einfache Kontaktklammer eingesetzt werden. Vorzugsweise wird eine zuletzt eingesetzte Bindematerialrolle einer Lagersäule wie zuvor beschrieben mit der davor eingesetzten Bindematerialrolle verknüpft. Der gemeinsame Bindematerialstrang wird nun in die Kontaktklammer geklemmt. Sinnig scheint an dieser Stelle die Positionierung der Kontaktklammer in einer Höhe einer handelsüblichen Bindematerialrolle. Sobald die vorletzte Bindematerialrolle einer Lagersäule verbraucht ist, wird der Bindematerialstrang, welcher sich bis jetzt mehr oder weniger locker in der Kontaktklemme befindet, beim Umreifen des zu formenden Ballens herausgezogen. Die Zustandsänderung der Kontaktklammer kann beispielsweise von einem Steuergerät erkannt werden. Alsdann kann eine Warnung über den Anbruch der letzten Bindematerialrolle in einem Display wiedergegeben werden. Alternativ sind auch andere optische Signale, beispielsweise eine Signalleuchte, oder akustische Signale, wie einem Signalhorn, denkbar. Auch eine Berechnung und/oder Anzeige, noch press- und umschlingbarer Ballen ist hilfreich. Ein Bediener kann dadurch beispielsweise das Neuverlegen der Bindematerialstränge vermeiden.

### Bezugszeichenliste:

- 1.: Großpackenpresse
- 2.: Zugdeichsel
- 3.: Aufnahmevorrichtung
- 4.: Maschinenverkleidungselement (front)
- 5.: Maschinenverkleidungselement (Tophaube)
- 6.: Maschinenverkleidungselement (Bindevorrichtung)
- 7.: Maschinenverkleidungselement (Seite)
- 8.: Maschinenverkleidungselement (Deckel für Lagersäulen)
- 9.: Presskanal
- 10.: Joch
- 11.: Ballenschurre
- 12.: Maschinenhauptrahmen
- 13.: Fahrwerk
- 14.: Stützrahmen
- 15.: Achse
- 16.: Lagerpunkt
- 17.: Schwenkachse
- 18.: Halterung
- 19.: Anlenkpunkt
- 20.: Bohrung
- 21.: Bindematerialrollen
- 22.: Lagersäule
- 23.: Tragstrebe
- 24.: Gestell
- 25.: Bügel

Nachfolgend wird eine bevorzugte Ausführungsform der Erfindung anhand einiger Zeichnungen näher beschrieben. Die Zeichnungen zeigen:
**FIG.1****:** eine perspektivische Ansicht einer landwirtschaftlichen Großpackenpresse mit einem (nicht sichtbaren) Stützrahmen und einer Maschinenverkleidung nach der Erfindung;
**FIG.2****:** eine Ansicht aus der Richtung des Presskanals auf einen erfindungsgemäßen Stützrahmen und ein dadurch gestütztes Maschinenverkleidungselement;
**FIG.3****:** verschiedene Maschinenverkleidungselemente wie in FIG.1, wobei zwei Lagersäulen an einer Tragstrebe um eine Achse in eine Beladeposition verschwenkt sind;
**FIG.4****:** ein Schnitt aus der FIG.3, bei der die bevorzugte Ausführung der Bindematerialrollen aufnehmenden Lagersäulen deutlich wird;

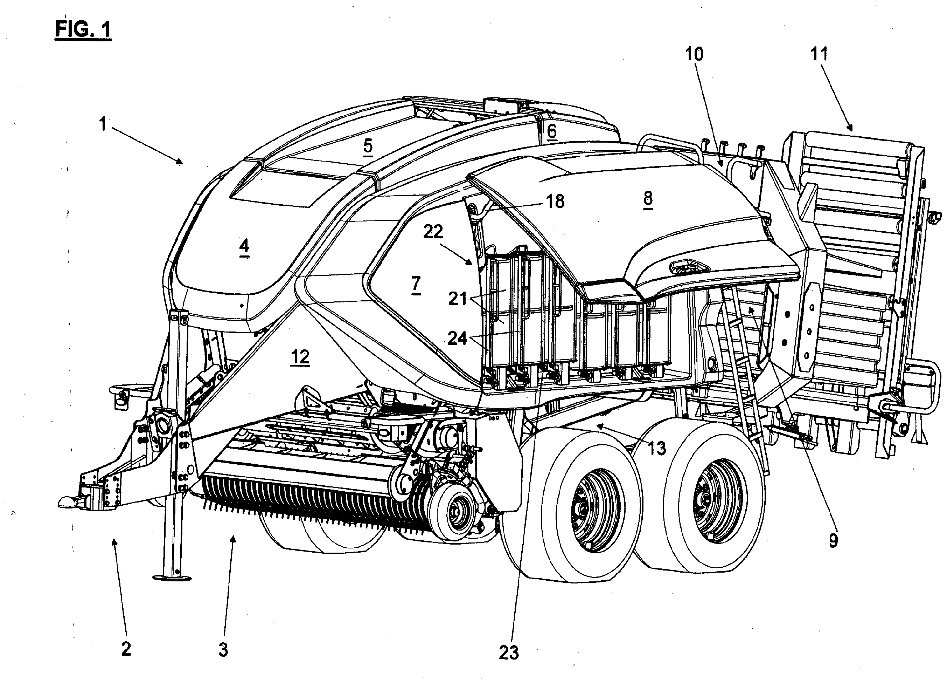

In **FIG.1** wird eine landwirtschaftliche Großpackenpresse 1 gemäß der Erfindung dargestellt. Zunächst lässt sich ein aus dem Stand der Technik vertrauter Aufbau mit einer Zugdeichsel 2 und einer darauf folgenden Aufnahmevorrichtung 3 erkennen.

Durch die Maschinenverkleidung und ihre einzelnen Maschinenverkleidungselemente 4, 5, 6, 7 und 8 lassen sich Fördereinrichtung, Presskolben und Bindeeinheit nicht exakt lokalisieren. Bekanntermaßen werden die genannten Einheiten jedoch an zu erwartenden Positionen eingesetzt, zumindest vergleichbar dem aktuellen Stand der Technik. Der Presskanal 9, in dem der Presskolben hin und her bewegt wird, ist noch mit seinem hinteren Ende und dem dazugehörigen Joch 10 zu erkennen. Hinter dem Joch 10 und direkt im Anschluss an den Presskanal 9 ist die Ballenschurre 11 in hochgeklappter Transportstellung sichtbar. Auch der Maschinenhauptrahmen 12 ist nur teilweise zu erkennen. Allerdings wird die Mulde in dem Maschinenverkleidungselement 7 sichtbar, in welcher die Lagersäulen 22 in ihrer Arbeitsposition verschwenkt sind. Die Gestelle 24 halten dabei die eingesetzten Bindematerialrollen 21 in Position. Das Maschinenverkleidungselement 8 bildet mit Hilfe der Halterung 18 eine am Stützrahmen 14 schwenkbare Klappe. Durch die Ausstattung wenigstens eines der Maschinenverkleidungselemente 7 oder 8 mit einer Gummilippe (nicht dargestellt) oder vergleichbarem Dichtelement wird das Eindringen von Staub und/oder Verschmutzungen verhindert.

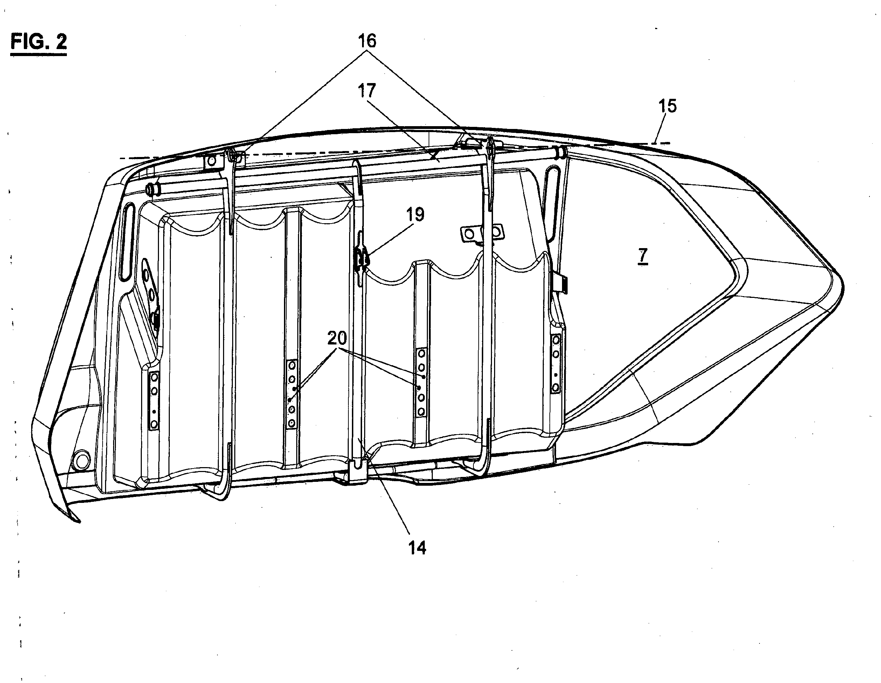

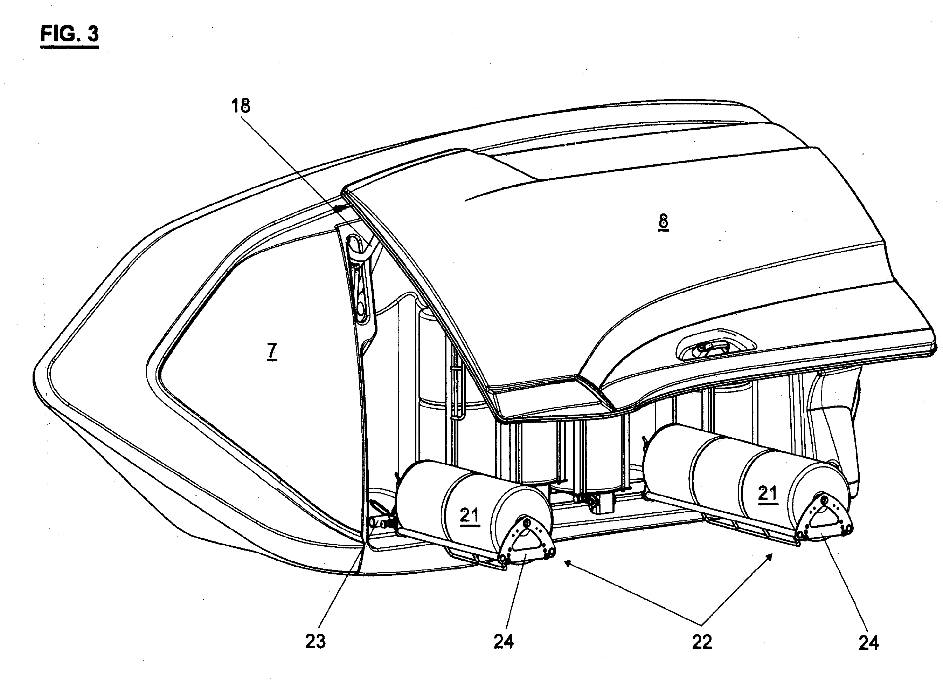

Durch die Maschinenverkleidungselemente 4, 5, 6, und 7 verdeckt nimmt der Maschinenhauptrahmen 12 die Presskammer 9, das Fahrwerk 13 und den in **FIG.2** sichtbaren Stützrahmen 14 für die Maschinenverkleidungselemente 7 und 8 auf. Der Stützrahmen 14 wird um eine Achse 15 an den Lagerpunkten 16 schwenkbar am Maschinenhauptrahmen 12 fixiert. Darüber hinaus ist eine Schwenkachse 17 im Stützrahmen 14 integriert. Diese Schwenkachse 17 ist dazu ausgelegt, eine Halterung 18 für das Maschinenverkleidungselement 8 aufzunehmen. Die Halterung 18 lässt sich in den Darstellungen **FIG.1** und **FIG.3** erkennen. Der Stützrahmen 14 weist weiterhin einen Anlenkpunkt 19 für einen Aktor, wie beispielsweise einen Hydraulikzylinder oder einen elektrischen Stellmotor auf, um den Stützrahmen 14 vom Maschinenhauptrahmen 12 in eine wartungsfreundliche Position zu schwenken. In der Wartungsposition sind Maschinengruppen mit beweglichen und/ oder angetriebenen Bauteilen zugänglich, während diese Bauteile während des Betriebs der Großpackenpresse durch die Maschinenverkleidungselemente 7 und 8 am Stützrahmen 14 unzugänglich sind. Um die Bindeeinheiten mit Bindematerial zu beschicken, sind in dem Maschinenverkleidungselement 7 Bohrungen 20 eingelassen. Diese Bohrungen 20 lassen die Verlegung von Bindematerialsträngen aus den Bindematerialrollen 21 aufnehmenden Lagersäulen 22 zu den dafür vorgesehenen Bindeeinheiten zu.

Neben der Halterung 18 für das Maschinenverkleidungselement 8 wird in der **FIG.3** ebenfalls die erfindungsgemäße Ausführung der Lagersäulen 22 und der dazugehörigen Gestelle 24 verdeutlicht. Zunächst wird das Zusammenspiel von Maschinenverkleidungselement 7 und 8 zur Abschirmung der Lagersäulen 22 und den darin befindlichen Bindematerialrollen 21 deutlich. Das als Klappe eingesetzte Maschinenverkleidungselement 8 ist an der Schwenkachse 17 des Stützrahmens 14 durch den Halter 18 nach oben schwenkbar. In der nach oben verschwenkten Position lässt sich das Maschinenverkleidungselement 8 durch Elemente wie Federn, Gasdruckfedern oder Gestängen fixieren. Weiterhin hinaus lässt sich erkennen, dass die Lagersäulen 22 auf einer Tragstrebe 23 befestigt sind und an dieser um eine etwa parallel zur Presskammer 9 verlaufende Achse verschwenkt werden können. Dabei wird empfohlen, die Lagersäulen 22 zumindest in ihrer vertikalen Position an der Tragstrebe 23 oder einem Verbindungselement zur Tragstrebe 23 arretieren zu können. Das Maschinenverkleidungselement 8 lässt sich darüber hinaus so weit nach oben verschwenken, dass das Gestell 24 der Lagersäule 22 berührungsfrei an dem geöffneten Maschinenverkleidungselement 8 vorbeigeschwenkt wird. In der horizontal verschwenkten Ladeposition ermöglicht das Gestell 24 dabei ein benutzerfreundliches Nachfüllen von Bindematerialrollen 21. Während der vertikalen Arbeitsposition sichert das Gestell 24 die Bindematerialrollen 21 dabei zusätzlich ab. Eine Belastung des Maschinenverkleidungselements 8 ist somit auszuschließen. Vorteilhafterweise wird ein Bindematerialstrang durch eine obere Bindematerialrolle 21 an die Maschine geleitet. Die Bindematerialrollen 21 werden, wie auch im Stand der Technik bekannt, untereinander verknüpft. Durch die Entnahme des Bindematerialstrangs aus der oberen Bindematerialrolle 21 wird die unterste Bindematerialrolle 21 zuletzt angebrochen. Dadurch wird sichergestellt, dass bis zum Aufgebrauch obere(n) Bindematerialrolle(n) 21 ein stabiler Grund durch die vollen, darunter befindliche(n) Bindematerialrolle(n) geboten ist.

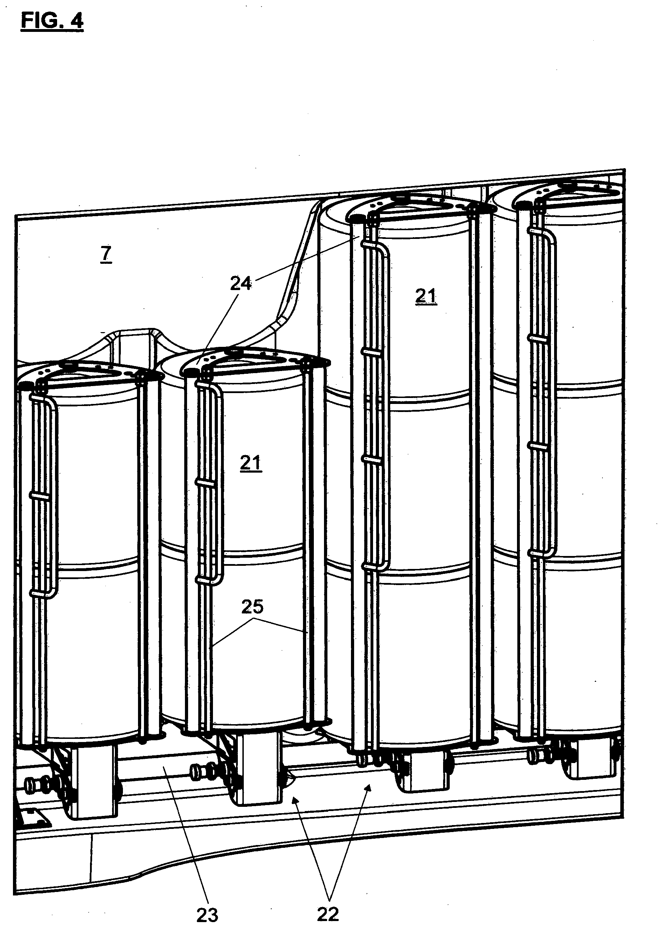

Die **FIG.4** lässt eine bevorzugte Ausführung der Lagersäulen 22 erkennen. Besonders die Tragstrebe 23 für das Gestell 24 und die Bügel 25 des Gestells 24 sind gut zu erkennen. Ebenso lässt sich die Mulde des Maschinenverkleidungselements 7 erkennen, welche die Rückwand eines Schutzkastens bildet. Erkennbar wird auch, dass das Maschinenverkleidungselement 7 keine tragende Funktion einnimmt. Das Gewicht der Lagersäulen 22 liegt zunächst auf dem Gestell 24. Dieses Gestell 24 stützt sich auf der mit dem Stützrahmen 14 verbundenen Tragstrebe 23 ab. Eine vorteilhafte Gewichtsersparnis zu bisherigen Bindemateriallagern, oder Garnkästen wird deutlich. Die zu dem Gestell 24 gehörenden Bügel 25 sind in der **FIG.4** steckbar ausgeführt. Es können also weitere am Gestell 24 befindliche Lochbilder genutzt werden, um verschiedene Größen von Bindematerialrollen 21 aufzunehmen und zu sichern.

## Patentansprüche

1. Landwirtschaftliche Großpackenpresse (1) mit einem Fahrwerk (13) zum Abstützen der Großpackenpresse (1) auf dem Feldboden, einer Aufnahmevorrichtung (3) zum Bergen von auf dem Feldboden liegendem Erntegut, wenigstens einer Fördereinrichtung zur Beförderung des geborgenen Ernteguts in einen Presskanal (9), in welchem ein hin und her beweglich angetriebener Presskolben dazu ausgelegt ist, das Erntegut zu verdichten, mit wenigstens einer dem Presskanal (9) zugeordneten Bindeeinheit zum Umreifen des Ernteguts mit Bindematerial, sowie zumindest einem Stützrahmen zur Aufnahme von Bindematerialrollen (21), der mit dem Maschinenhauptrahmen (12) verbunden ist, **dadurch gekennzeichnet, dass** der Stützrahmen (14) zumindest eine Bindematerialrollen (21) aufnehmende, vertikal ausgerichtete Lagersäule (22) abstützt und die Lagersäule (22) zum Nachfüllen von Bindematerial von ihrer vertikalen Arbeitsposition in eine horizontale Ladeposition schwenkbar ausgeführt ist, wobei die zumindest eine Bindematerialrollen (21) aufnehmende Lagersäule (22) von zumindest zwei Maschinenverkleidungselementen (7,8) umschlossen wird, welche sich wie die Lagersäulen (22) auf dem Stützrahmen (14) abstützen und keine tragende Funktion bei der Abstützung der Bindematerialrollen (21) übernehmen.

2. Landwirtschaftliche Großpackenpresse (1) nach Anspruch 1, **dadurch gekennzeichnet, dass** der Stützrahmen (14) zur Aufnahme von Bindematerialrollen (21) als Rohrrahmen ausgeführt ist.

3. Landwirtschaftliche Großpackenpresse (1) nach Anspruch 1 oder 2, **dadurch gekennzeichnet, dass** der Stützrahmen (14) um eine etwa horizontale Achse (15) schwenkbar an dem Maschinenhauptrahmen (12) angebracht ist.

4. Landwirtschaftliche Großpackenpresse (1) nach wenigstens einem der Ansprüche 1 bis 3, **dadurch gekennzeichnet, dass** wenigstens zwei Maschinenverkleidungselemente (7,8) kombiniert eine zumindest größtenteils staub- und/oder schmutzdichte Hülle um die zumindest eine Lagersäule (22) bilden.

5. Landwirtschaftliche Großpackenpresse (1) nach Anspruch 4, **dadurch gekennzeichnet, dass** wenigstens ein Maschinenverkleidungselement (7,8) um die etwa horizontale Achse (15) des Stützrahmens (14) schwenkbar am Maschinenhauptrahmen (12) angebracht ist.

6. Landwirtschaftliche Großpackenpresse (1) nach wenigstens einem der vorherigen Ansprüche, **dadurch gekennzeichnet, dass** wenigstens ein Maschinenverkleidungselement (8) um eine etwa horizontale Achse (17) schwenkbar mit dem Stützrahmen (14) verbunden ist.

7. Landwirtschaftliche Großpackenpresse (1) nach wenigstens einem der vorherigen Ansprüche, **dadurch gekennzeichnet, dass** wenigstens ein Maschinenverkleidungselement (8) unabhängig vom Stützrahmen (14) um eine etwa horizontale Achse (15) schwenkbar an dem Maschinenhauptrahmen (12) angelenkt ist.

8. Landwirtschaftliche Großpackenpresse (1) nach wenigstens einem der vorherigen Ansprüche, **dadurch gekennzeichnet, dass** wenigstens ein Maschinenverkleidungselement (8) unabhängig vom Stützrahmen (14) um eine etwa horizontale Achse schwenkbar mit einem weiteren Maschinenverkleidungselement (7) verbunden ist.

9. Landwirtschaftliche Großpackenpresse (1) nach wenigstens einem der vorherigen Ansprüche, **dadurch gekennzeichnet, dass** die Maschinenverkleidungselemente (4, 5, 6, 7, 8) aus wenigstens einem Kunststoff gefertigt sind.

10. Landwirtschaftliche Großpackenpresse (1) nach Anspruch 9, **dadurch gekennzeichnet, dass** es sich bei dem Kunststoff um einen Faserverbundkunststoff handelt.

11. Landwirtschaftliche Großpackenpresse (1) nach Anspruch 1, **dadurch gekennzeichnet, dass** wenigstens eine Lagersäule (22) zur Aufnahme von Bindematerialrollen (21) einer Bindeeinheit zugeordnet ist.

12. Landwirtschaftliche Großpackenpresse (1) nach Anspruch 1, **dadurch gekennzeichnet, dass** die Aufnahme für Bindematerialrollen (21) der Lagersäule (22) als Bindematerialrollen (21) aufnehmende Rinne ausgeführt ist.

13. Landwirtschaftliche Großpackenpresse (1) nach wenigstens einem der vorherigen Ansprüche, **dadurch gekennzeichnet, dass** die Aufnahme für Bindematerialrollen (21) der Lagersäule (22) variabel ausgeführt ist, sodass Bindematerialrollen (21) verschiedener Größen eingesetzt werden können.

14. Landwirtschaftliche Großpackenpresse (1) nach Anspruch 13, **dadurch gekennzeichnet, dass** die Aufnahme für Bindematerialrollen (21) der Lagersäule (22) aus einem Gestell (24) mit wenigstens zwei positionsveränderlichen Bügeln (25) besteht.

15. Landwirtschaftliche Großpackenpresse (1) nach Anspruch 13 oder 14, **dadurch gekennzeichnet, dass** die Aufnahme für Bindematerialrollen (21) der Lagersäule (22) ein Gestell (24) mit wenigstens zwei Bügeln (25) aufweist, welche je wenigstens ein Exzenterelement enthalten.

16. Landwirtschaftliche Großpackenpresse (1) nach Anspruch 1, **dadurch gekennzeichnet, dass** wenigstens eins der Maschinenverkleidungselemente (7 oder 8) einen Sensor aufnimmt, durch den der Bindematerialverbrauch wenigstens teilweise erkannt wird.

## Claims

1. Agricultural large square baler (1) comprising a chassis (13) for supporting the large square baler (1) on the field soil, a pick-up device (3) for retrieving harvested crops lying on the field soil, at least one conveying apparatus for conveying the retrieved harvested crops into a pressing channel (9), in which a reciprocatingly driven plunger is designed to compress the harvested crops, comprising at least one binding unit assigned to the pressing channel (9) for strapping the harvested crops with binding material, and at least one support frame for receiving binding material rolls (21), which supporting frame is connected to the machine main frame (12), **characterised in that** the support frame (14) supports at least one vertically oriented storage column (22) which receives binding material rolls (21), and the storage column (22) is designed to be pivotable from its vertical working position into a horizontal loading position in order to refill the binding material, the at least one storage column (22) which receives binding material rolls (21) being enclosed by at least two machine cladding elements (7, 8) which, like the storage columns (22), are supported on the support frame (14) and do not perform a load-bearing function in supporting the binding material rolls (21).

2. Agricultural large square baler (1) according to claim 1, **characterised in that** the support frame (14) for receiving binding material rolls (21) is designed as a tubular frame.

3. Agricultural large square baler (1) according to either claim 1 or claim 2, **characterised in that** the support frame (14) is attached to the machine main frame (12) so as to be pivotable about an approximately horizontal axis (15).

4. Agricultural large square baler (1) according to at least one of claims 1 to 3, **characterised in that** at least two machine cladding elements (7, 8) combine to form an at least largely dust-tight and/or dirt-tight shell around the at least one storage column (22).

5. Agricultural large square baler (1) according to claim 4, **characterised in that** at least one machine cladding element (7, 8) is attached to the machine main frame (12) so as to be pivotable about the approximately horizontal axis (15) of the support frame (14).

6. Agricultural large square baler (1) according to at least one of the preceding claims, **characterised in that** at least one machine cladding element (8) is connected to the support frame (14) so as to be pivotable about an approximately horizontal axis (17).

7. Agricultural large square baler (1) according to at least one of the preceding claims, **characterised in that** at least one machine cladding element (8) is articulated on the machine main frame (12) so as to be pivotable about an approximately horizontal axis (15) independently of the support frame (14).

8. Agricultural large square baler (1) according to at least one of the preceding claims, **characterised in that** at least one machine cladding element (8) is connected to a further machine cladding element (7) so as to be pivotable about an approximately horizontal axis independently of the support frame (14).

9. Agricultural large square baler (1) according to at least one of the preceding claims, **characterised in that** the machine cladding elements (4, 5, 6, 7, 8) are made from at least one plastics material.

10. Agricultural large square baler (1) according to claim 9, **characterised in that** the plastics material is a fibre composite plastics material.

11. Agricultural large square baler (1) according to claim 1, **characterised in that** at least one storage column (22) for receiving binding material rolls (21) is assigned to a binding unit.

12. Agricultural large square baler (1) according to claim 1, **characterised in that** the receptacle for binding material rolls (21) of the storage column (22) is designed as a groove which receives binding material rolls (21).

13. Agricultural large square baler (1) according to at least one of the preceding claims, **characterised in that** the receptacle for binding material rolls (21) of the storage column (22) is designed to be variable, such that binding material rolls (21) of different sizes can be used.

14. Agricultural large square baler (1) according to claim 13, **characterised in that** the receptacle for binding material rolls (21) of the storage column (22) consists of a frame (24) having at least two position-variable brackets (25).

15. Agricultural large square baler (1) according to either claim 13 or claim 14, **characterised in that** the receptacle for binding material rolls (21) of the storage column (22) has a frame (24) having at least two brackets (25) which each contain at least one eccentric element.

16. Agricultural large square baler (1) according to claim 1, **characterised in that** at least one of the machine cladding elements (7 or 8) accommodates a sensor, by means of which the binding material consumption is at least partially detected.

## Revendications

1. Presse agricole à grosses balles (1) comprenant :
- un châssis (13) pour porter la presse à grosses balles (1) sur le sol,
- un dispositif récepteur (3) pour prendre le produit agricole étalé sur le sol,
- au moins une installation de transfert pour transférer le produit agricole récolté dans un canal de presse (9) équipé d'un piston de presse entraîné suivant un mouvement de va-et-vient pour comprimer le produit agricole,
- au moins une unité de nouage associée au canal de presse (9) pour cercler le produit de récolte avec un matériau de nouage ainsi qu'au moins un cadre de support pour recevoir les bobines de matériau de nouage (21), ce cadre étant relié au châssis principal (12) de la machine,
presse **caractérisée en ce que**
le cadre de support (14) comporte au moins une colonne de stockage (22) orientée verticalement et recevant une bobine de matériau de nouage (21), la colonne de stockage (22) étant montée pivotante pour assurer l'alimentation en matériau de nouage, en passant de sa position verticale de travail, dans une position horizontale de chargement,
la colonne de stockage (22) recevant au moins une bobine de matériau de nouage (21) étant entourée par au moins deux éléments d'habillage (7, 8) de la machine qui s'appuient sur le cadre de support (14) comme les colonnes de stockage (22) et n'ont pas de fonction de support pour porter les bobines de matériau de nouage (21).

2. Presse agricole à grosses balles (1) selon la revendication 1, **caractérisée en ce que**
le cadre de support (14) est réalisé comme cadre tubulaire pour recevoir les bobines de matériau de nouage (21).

3. Presse agricole à grosses balles (1) selon la revendication 1 ou 2, **caractérisée en ce que**
le cadre de support (14) est monté pivotant sur le châssis principal (12) de la machine autour d'un axe (15) sensiblement horizontal.

4. Presse agricole à grosses balles (1) selon au moins l'une des revendications 1 à 3,
**caractérisée en ce que**
au moins deux éléments d'habillage (7, 8) de la machine combinés, forment une enveloppe au moins en grande partie étanche à la poussière et/ou à la saleté autour d'une colonne de stockage (22).

5. Presse agricole à grosses balles (1) selon la revendication 4, **caractérisée en ce que**
au moins un élément d'habillage (7, 8) de la machine est monté pivotant sur le châssis principal (12) de la machine autour de l'axe sensiblement horizontal (15) du cadre de support (14).

6. Presse agricole à grosses balles (1) selon au moins l'une des revendications précédentes,
**caractérisée en ce que**
au moins un élément d'habillage (8) de la machine est relié au cadre de support (14) de manière pivotante autour d'un axe sensiblement horizontal (17).

7. Presse agricole à grosses balles (1) selon l'une des revendications précédentes,
**caractérisée en ce que**
au moins un élément d'habillage (8) de la machine est articulé de manière pivotante sur le châssis principal (12) de la machine autour d'un axe sensiblement horizontal (15), indépendamment du cadre de support (14).

8. Presse agricole à grosses balles (1) selon au moins l'une des revendications précédentes,
**caractérisée en ce que**
au moins un élément d'habillage (8) de la machine est relié de manière pivotante autour d'un axe sensiblement horizontal à un autre élément d'habillage (7) de la machine, indépendamment du cadre de support (14).

9. Presse agricole à grosses balles (1) selon au moins l'une des revendications précédentes,
**caractérisée en ce que**
les éléments d'habillage (4, 5, 6, 7, 8) de la machine sont fabriqués au moins en une matière plastique.

10. Presse agricole à grosses balles (1) selon la revendication 9, **caractérisée en ce que**
la matière plastique est une matière plastique composite avec des fibres.

11. Presse agricole à grosses balles (1) selon la revendication 1, **caractérisée en ce que**
au moins une colonne de stockage (22) est associée à une unité de nouage pour recevoir des bobines de matériau de nouage (21).

12. Presse agricole à grosses balles (1) selon la revendication 1, **caractérisée en ce que**
le logement des bobines de matériau de nouage (21) de la colonne de stockage (22) est réalisé comme goulotte recevant des bobines de matériau de nouage (21).

13. Presse agricole à grosses balles (1) selon l'une des revendications précédentes,
**caractérisée en ce que**
le logement pour les bobines de matériau de nouage (21) de la colonne de stockage (22) est réalisé de manière variable pour recevoir des bobines de matériau de nouage (21) de différentes tailles.

14. Presse agricole à grosses balles (1) selon la revendication 13, **caractérisée en ce que**
le logement pour les bobines de matériau de nouage (21) de la colonne de stockage (22) se compose d'une structure (24) ayant au moins deux arceaux (25) variables en position.

15. Presse agricole à grosses balles (1) selon la revendication 13 ou 14, **caractérisée en ce que**
le logement des bobines de matériau de nouage (21) de la colonne de stockage (22) comporte une structure (24) ayant au moins deux arceaux (25) qui ont chacun au moins un élément excentré.

16. Presse agricole à grosses balles (1) selon la revendication 1, **caractérisée en ce que**
au moins l'un des éléments d'habillage (7) ou (8) de la machine comporte un capteur qui permet de détecter au moins en partie, la consommation de matériaux de nouage.
